# EUROPEAN PATENT SPECIFICATION

(11) **EP 1 140 684 B1**
(45) Date of publication and mention of the grant of the patent: **20.10.2004**
(21) Application number: 99966235.6
(22) Date of filing: 14.12.1999
(51) Int. Cl.: B65H 75/14, B65H 75/18, G02B 6/44

(54) **OPTICAL FIBER SPOOL PROVIDING ACCESS TO THE INNER END OF THE WOUND OPTICAL FIBER**
SPULE FÜR LICHTWELLENLEITER BEI DER DAS INNERE ENDE DES AUFGEWICKELTEN LEITERS ZUGÄNGLICH IST
BOBINE DE FIBRE OPTIQUE PERMETTANT D'ACCEDER A L'EXTREMITE INTERNE DE LA FIBRE OPTIQUE ENROULEE

(30) Priority: 30.12.1998 US 114516 P
(43) Date of publication of application: 10.10.2001
(73) Proprietor: Corning Incorporated, Corning, New York 14831 (US)
(72) Inventor: BUMGARNER, Kirk, P., Wilmington, NC 28411 (US); FUCCELLA, Daniel, C., Cary, NC 27513 (US); MURPHY, Michael, T., Long Beach, NC 28465 (US); ROBERTS, Kenneth, W., Wilmington, NC 28409 (US); TUCKER, David, A., Wilmington, NC 28405 (US)
(74) Representative: Reinhard - Skuhra - Weise & Partner
(86) International application number: PCT/US1999/029670
(87) International publication number: WO 2000/040495

(56) References cited:
- EP-A- 0 499 201
- EP-A- 0 514 858
- EP-A- 0 662 623
- FR-A- 2 531 688
- JP-A- 7 218 789
- US-A- 629 115
- US-A- 4 387 863
- US-A- 4 653 331
- US-A- 4 696 438

## Description

### BACKGROUND OF THE INVENTION

### Field of the Invention

The present invention refers to a spool for high speed winding thereon an optical fiber with an easy access to the inner end of the wound fiber and to a method for high speed winding an optical fiber on this spool.

### Description of the Prior Art

At the end of the manufacturing process, optical fiber is typically wound onto a shipping spool for internal processing, shipping to a customer, and subsequent processing at the customer's facility. In order to allow the entire length of the fiber to be tested for various attributes, such as attenuation, it is necessary to provide access to both ends of the wound fiber. It is also desirable to have access to both ends of the fiber so that fiber samples may be removed from either end for other optical and geometric measurements.

There is no problem in obtaining access to the outer end of the fiber. Fiber from that end may simply be unwound from the spool, as needed. On the other hand, special accommodation must be made to provide access to the inner end of the fiber, also known as the "under-wrap", as that end lies under the fiber pack which may consist of hundreds of layers of fiber wound onto the shipping spool. The "lead meter", is attached to the under-wrap that is readily accessible.

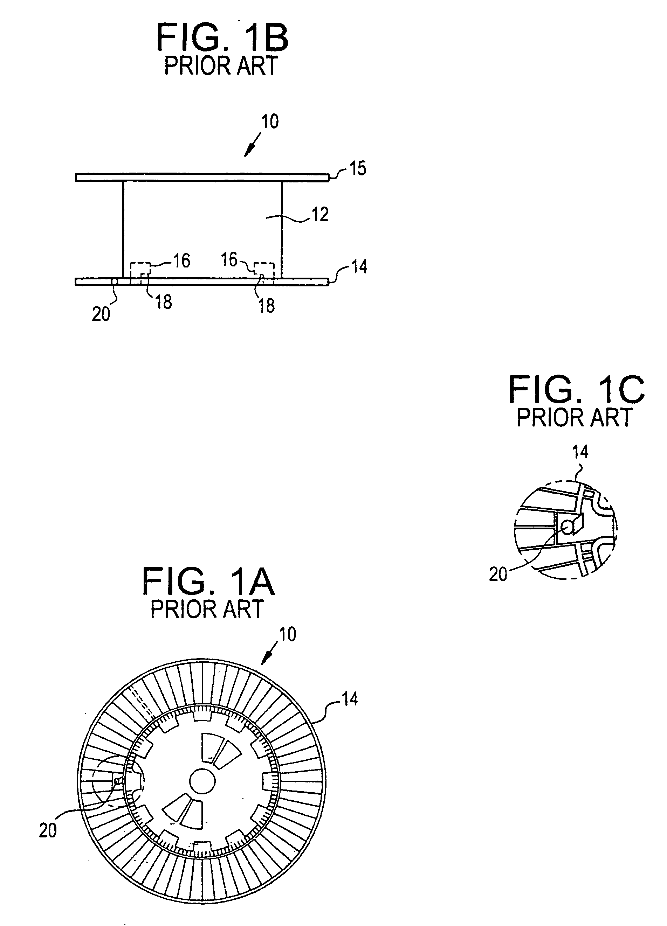

One currently known method for creating access to the under-wrap is an inefficient and time-consuming manual process, described below in connection with Figs. 1A-C. Therefore there is a need for a system and methods for easily and readily providing access to the optical fiber under-wrap.

US-A-4,387,863 discloses a spool for receiving windings of elongated material such as connectorized lightguide cable comprising a primary barrel and a lead meter barrel separated from each other by an outport flange. The outport flange has a slot extending to its periphery, and the slot provides a path for fiber between the lead meter and primary barrels. Further, the slot has an inlet facing the lead meter barrel and an outlet facing the primary barrel and being angled at less than 90°, in particular at about 45°.
Disadvantageously, the slot is not suitable for high speed winding of optical fiber since fiber breakage would occur due to the fact that there is no angle along the side of working surface of the slot.

EP-A-0 662 623 describes a fiber optic winding spool having a primary barrel and a lead meter barrel separated from each other by an outboard flange, said outboard flange having one or two exit slots for exit of the optical fiber from the lead meter barrel. Further, the outboard flange includes a plurality of arcuately curved intersecting ribs.

JP-A-407218789 discloses an optical fiber spool comprising a drum part with two flange parts, one of the flange parts having a through hole and a lead out groove linked therewith. The entrance of the through hole is positioned on the center axis of the drum part and the exit is positioned on the center axis in a radial direction of the drum part so as to eliminate the curvature at the start end part of the optical fiber as much as possible. The inside of the hole connecting the entrance and the exit is made linear in the direction having an angle of 70-90° to the center axis as a guide path for the optical fiber.

US-A-629,115 describes a cable reel having a tubular shaft and flanges wherein a disc is provided between the flanges to divide the reel into sections of corresponding or different lengths. The disc comprises an angled groove for leading a part of the cable on one side and on its circumference. This cable reel is provided for winding thereon a steel cable and not an optical fiber. In particular, an optical fiber cannot be wound thereon at a high speed due to the unavoidable bending stress that occurs in the groove due to the configuration of the machined groove and angles.

### SUMMARY OF THE INVENTION

In order to provide a spool for high speed winding thereon an optical fiber with an easy access to the inner end of the wound fiber and the method for high speed winding an optical fiber onto a spool with an easy access to the inner end of the wound fiber, a spool according to claim 1 and a method according to claim 19 are provided.

Further, advantageous embodiments of the spool are characterized in dependent claims 2 to 18. Further preferred embodiments of the method are mentioned in dependent claims 20 to 22.

Additional features and advantages of the present invention will become apparent by reference to the following detailed description and accompanying drawings.

### BRIEF DESCRIPTION OF THE DRAWINGS

Figs. 1A and 1B show, respectively, bottom and side views of a shipping spool according to the prior art.
Fig. 1C shows a close-up view of a lead meter hole in the shipping spool shown in Figs. 1A and 1B.
Figs. 2A and 2B show, respectively, bottom and side views of a first embodiment of a shipping spool according to the invention.
Fig. 2C shows a close-up view of an outboard flange slot in the shipping spool shown in Figs. 2A and 2B.
Figs. 3A-E show a side view of a shipping spool according to the invention at various points during the winding process.
Fig. 4 shows a close-up view of an outboard flange slot at the point at which the fiber has completed its traverse from the lead meter barrel to the primary barrel.
Figs. 5A-C show a bottom view of a shipping spool according to the invention illustrating various operational parameters of the spool.
Fig. 5D is a composite side and bottom view illustrating, among other things, the "slot included angle" parameter.
Fig. 6 is a side view of a flat-flange embodiment of a shipping spool according to the invention.
Figs. 7A and 7B show, respectively, side and bottom perspective views of a "constant velocity" outboard flange slot according to the invention.
Figs. 8A and 8B show, respectively, side and bottom perspective views of a "controlled acceleration" outboard flange slot according to the invention.
Figs. 9A-C show, respectively, side, bottom perspective, and bottom views of a "delayed entry" outboard flange slot according to the invention.
Figs. 10A and 10B show, respectively, side and bottom views of a shipping spool according to the invention, in which the lead meter end of the optical fiber has been captured by a snagger tooth.
Fig. 11 shows a bottom view of an outboard flange having an alternative rib configuration.
Figs. 12A and 12B show, respectively, side and bottom views of a shipping spool according to the invention including an anti-traverse profile.

### DETAILED DESCRIPTION

In one method for making optical fiber, during the "draw" phase of the process, fiber is drawn from a preform at a draw tower and then wound onto a bulk spool containing as much as 400 kilometers of optical fiber. In the "screening" phase of the process, the bulk spool is taken "off-line," i.e., disconnected from the fiber output of the draw tower, and then placed onto an Off-Line Screening (OLS) machine. There, the optical fiber is tested for strength, wound onto a shipping spool and then cut to length for further processing and shipping. Typically, in the draw phase, the optical fiber is wound onto the bulk spool by rotating the spool at high speed as fiber is fed onto the spool by a flying head that travels alongside the spool, back and forth along its length. In the screening phase, on the other hand, an alternative winding technique may be used, in which the optical fiber is wound onto the shipping spool by rotating the spool at high speed and moving the spool back and forth along its longitudinal axis as fiber is fed onto it. However, it will be appreciated in light of the following discussion that the present invention can be practiced with either type of winding setup.

Figs. 1A and 1B show, respectively, top and side views of a prior-art optical fiber shipping spool 10. As shown in Fig. 1B, the spool 10 includes a cylindrical primary barrel 12, around which the optical fiber is wound, and first and second flanges 14 and 15 that define outside limits for the fiber being wound onto the primary barrel. In addition, the shipping spool 10 includes a recessed cylindrical lead meter barrel portion 16 (drawn larger than scale) that is integrally formed into the first flange 14. The lead meter barrel portion 16 includes a lead meter flange portion 18. Finally, a lead meter hole 20 is provided in the first flange 14, providing a pathway for optical fiber to be fed between the lead meter barrel 16 and the primary barrel 12. Fig. 1C shows a close-up view of the lead meter hole in the first flange 14.

Under-wrap access on the shipping spool shown in Figs. 1A-C is created as follows. First, a bulk spool wound with fiber is loaded onto the pay-out side of an OLS machine, and an empty shipping spool of the type shown in Figs. 1A-C is loaded onto the receiving side of the OLS machine. Second, the end of the fiber is unrolled from the bulk spool and then threaded through the pulleys on the machine to the shipping spool. Third, the end of the fiber is threaded from the inside of first flange 14 of the shipping spool through lead meter hole 20. A length of approximately five to ten meters of fiber, enough for twenty revolutions around the lead meter barrel, is pulled through the lead meter hole 20 and then manually (hand) wound onto the lead meter barrel 16. Once the lead meter barrel 16 has been wound, the end is taped and the OLS machine is started, and optical fiber is automatically wound onto the primary barrel 12 between the first and second flanges 14 and 15 of the shipping spool 10 until a predetermined length of fiber is wound on and again the end is taped.

The five- to ten-meter length of fiber wound onto the lead meter barrel provides a sufficient amount of fiber for measurements, for example, for: (1) optical access for double-ended optical time-domain reflectometer (OTDR) measurements, (2) samples to check other optical and geometric properties, and (3) fiber to be used by the customer for additional optical measurements.

The above-described procedure suffers from a number of disadvantages. First, the procedure, especially the threading and manual wind onto the lead meter barrel, is time-consuming and cumbersome. Moreover, the lead meter requires reaching into a narrow, recessed region. Further, because the lead meter is threaded and wound manually, the winding machine must be stopped and started as each spool is wound. Thus, the prior art spool does not readily lend itself to fully automated winding thereof.

In addition, in a typical prior art system, there is a problem in controlling the tension of the optical fiber at the lead meter barrel. Because the lead meter barrel is wound manually, the tension of the lead meter is controlled solely by feel. Improper tension can result in the fiber having to be rewound. Further, there is a problem controlling the tension of the fiber passing through the lead meter hole.

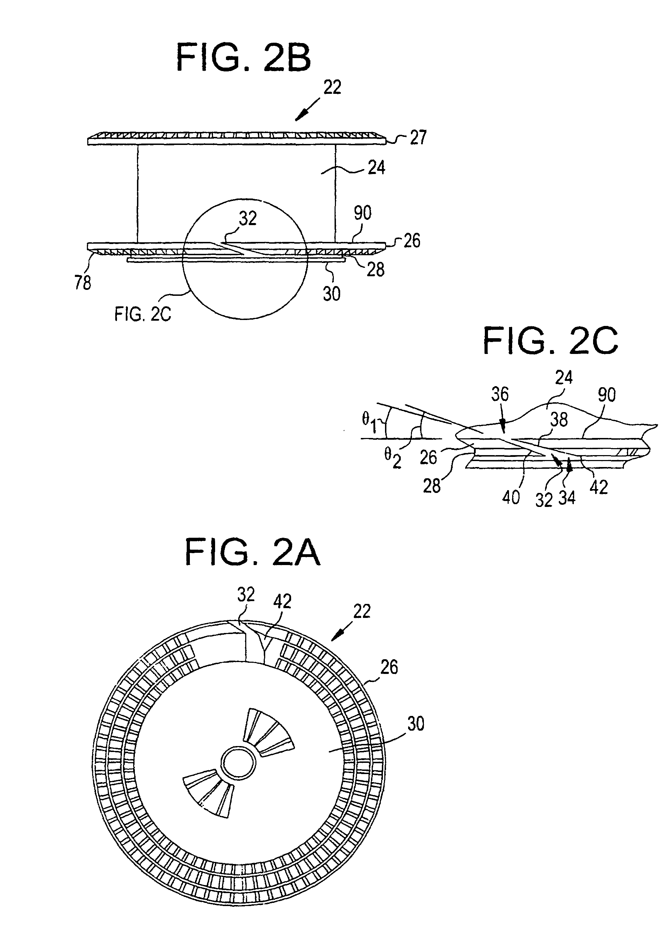

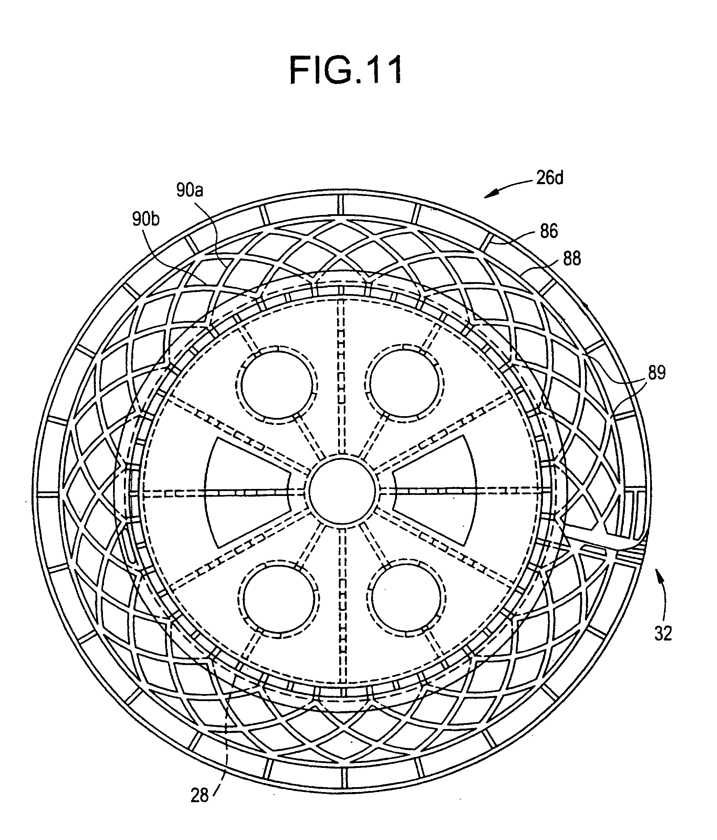

The present invention provides an advantageous winding system that overcomes these drawbacks in the prior art by allowing optical fiber to be wound in an automatic sequence onto both the lead meter barrel portion and the primary barrel portion of a specially designed shipping spool. Figs. 2A and 2B show, respectively, side and bottom views of a first embodiment of a shipping spool 22 according to the invention. As shown in Fig. 2A, the spool 22 includes a primary barrel portion 24, around which the optical fiber is wound. The outside limits of the fiber wound onto the primary barrel portion 24 are defined by outboard and inboard flanges 26 and 27. In the present embodiment, these flanges are ribbed to combine lightness with strength. Fig. 11, discussed below, shows an alternative embodiment of a rib pattern that may be advantageously used in practicing the present invention.

The spool 22 shown in Figs. 2A and 2B further includes a lead meter barrel portion 28 around which the lead meter portion of the optical fiber is wound. Unlike the lead meter barrel portion 16 in the prior art shipping spool 10, discussed above, the present lead meter barrel 28 is not recessed, but rather protrudes axially from outboard flange 26. Further, the width of the present lead meter barrel 28 is somewhat greater than that of its prior art counterpart. The lead meter barrel 28 is separated from the primary barrel 24 by the outboard flange 26. The outside limits of the lead meter barrel portion 28 are defined by the outboard flange 26 and a lead meter flange 30. As is apparent from Figs. 2A and 2B, the lead meter barrel portion 28 and lead meter flange 30 lie along the same longitudinal axis, i.e., are coaxial with, the primary barrel 24 and inboard and outboard flanges 27 and 26.

The shipping spool shown in Figs. 2A and 2B includes a slot 32 in the outboard flange 26. The slot is angled at less than 90 degrees, and more preferably the slot is angled less than 45 degrees. Most preferably, the slot is angled about 20 degrees with respect to the inboard surface 90. The slot 32 provides a pathway for optical fiber between the lead meter barrel 28 and the primary barrel 24. The slot 32 replaces the lead meter hole found in the prior art spool discussed above. It preferably extends from the surfaces of the primary and lead meter barrels 24, 28 to the outer periphery of the outboard flange 26. The spool is plastic and is injection-molded, with the slot 32 being integrally molded into the outboard flange 26 during the molding process.

As described in greater detail below, the geometry of the slot is designed such that after fiber has been wound onto the lead meter barrel 28 and comes into contact with the slot 32, the fiber is accelerated and traversed through the slot and onto the primary barrel 24 without any interruption in the winding process. The slot is designed such that the outboard flange 26 becomes transparent to the optical fiber as the fiber makes the traverse from the lead meter barrel to the primary barrel. In other words, the slot 32 acts as a cam to accelerate the fiber from one side of the outboard flange 26 to the other, thereby providing full access to a discrete portion of the under-wrap that has been wound onto the lead meter barrel 28. This eliminates the need for the manual threading and lead meter winding process used in the prior art.

Fig. 2C shows an enlarged view of the slot 32 in the outboard flange 26. As described above, the slot 32 accelerates fiber from the slot's inlet side 34, i.e., from the direction of the lead meter barrel 28, toward the slot's outlet side 36, i.e., toward the direction of the primary barrel 24. The slot 32 is defined by two opposing surfaces, a lead-in surface 38 and a working surface 40. As shown in the illustrated embodiment, the lead-in surface 38 and the working surface 40 are preferably non-parallel with each other. Thus, the inlet side 34 of the slot 32 is larger than the outlet side 36. This narrowing minimizes the unsupported fiber on the inside surface of the flange. Preferably, an angle θ₁ of about 15 degrees is provided on the lead-in surface 38 measured from the inboard surface 90. A larger angle θ₂ of about 20 degrees is provided on the working surface 40, again measured from the inboard surface 90.

As its name implies, the lead-in surface 38 guides the optical fiber into the slot 32 at winding speed in a controlled manner that minimizes tension spikes. As shown in Fig. 2A, the lead-in surface 38 may include a tapered portion 42 that facilitates the lead-in function. Similarly, as its name implies, the working surface 40 laterally accelerates the fiber through the slot. As described in greater detail below, the rotation of the shipping spools causes the optical fiber to be urged against the working surface 40, thereby inducing the acceleration.

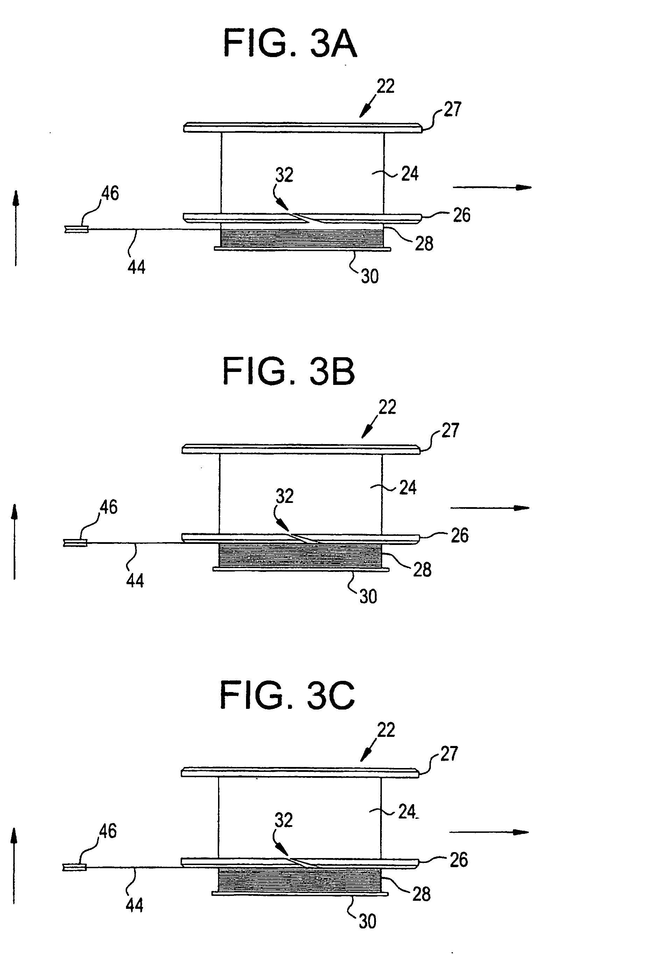

The operation of the present spool 22 can better be understood with reference to Figs. 3A-F, which show the shipping spool 22 at different stages during the winding process. For the purposes of illustration, the lead meter barrel 28 in these figures has been drawn with a greater than normal width.

The winding process is commenced by mounting the empty spool onto a rotatable spindle assembly and affixing the end of the optical fiber 44 to the lead meter barrel 28, proximate to the lead meter flange 30. In an OLS process, this can be accomplished by manually taping the end of the fiber 44 to the lead meter barrel 28. Once the end of the fiber 44 is attached to the lead meter barrel 28, the spool 22 is rotated, and fiber 44 begins to wind onto the lead meter barrel 28.

Fig. 3A shows a side view of the spool 22 in the middle of the winding of the lead meter segment of optical fiber 44 onto the lead meter barrel 28. The lead meter barrel 28 is located at the bottom of the spool 22, as shown. The terms side and bottom are illustrative only as used herein and it should be recognized that the spools may be wound in any orientation practicable, and preferably with the axial axis being horizontal. The optical fiber 44 is fed to the spool by means of a flying head assembly 46. As the fiber 44 winds onto the lead meter barrel 28, the flying head 46 moves upward at a rate that has been calculated with respect to the diameter of the spool 22, the width of the fiber 44, and the speed at which the spool 22 is rotated, such that the combined rotation of the spool 22 and motion of the flying head 46 cause optical fiber 44 to be wound onto the lead meter barrel 28 and primary barrel 24 in an even spiral, in which each row of the spiral immediately abuts the previous row. The distance between consecutive rows in the spiral is known as the winding "pitch," which can be adjusted by changing the speed at which the flying head 46 moves upward or downward (or back and forth, depending upon the orientation of winding) relative to the rotating spool 22. During this portion of the winding process; the angle of the fiber 44 relative to the flying head 46 remains substantially flat, approximating 180 degrees, as the velocity of the flying head 46 is approximately equal to the fiber transverse velocity, i.e., the speed at which the spiral of optical fiber 44 progresses up the length of the lead meter barrel 28.

The optical fiber 44 continues to be wound onto the lead meter barrel 28 until, as shown in Fig. 3B, the flying head 46 has advanced to the point at which the optical fiber 44 makes contact with the outboard flange 26. At this point, the lead meter barrel 28 has been fully wound with optical fiber 44.

The flying head 46 continues to move upward, but the fiber transverse velocity stagnates as the spiral progression of the fiber 44 wound onto the lead meter barrel 28 is temporarily blocked by the outboard flange 26. Thus, as shown in Fig. 3C, the flying head 46 has continued to advance, but, because of the presence of the outboard flange 26, the fiber 44 being wound onto the lead meter barrel 28 now lags behind the flying head 46.

As the flying head 46 traverses beyond the face of the outboard flange 26, the fiber 44 is urged against the tapered lead-in portion 42 of the slot's lead-in surface 38. The lead-in portion 42 must be long enough and sufficiently tapered so that the fiber 42 does not "slip over" the slot 32. The working surface 40 of the slot 32, i.e., the surface of the slot opposite the lead-in surface 38 is configured such that the fiber 44 is accelerated through the slot 32 to the other side of the outboard flange 26 with an acceptably low level of impact to fiber tension and coating. Alternative slot geometries are discussed further below.

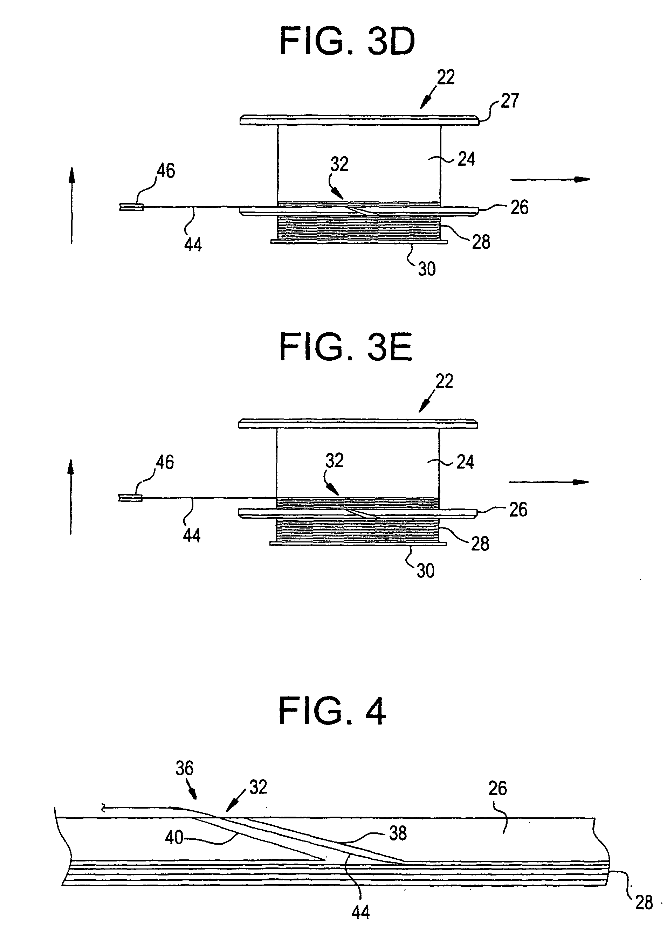

In Fig. 3D, the optical fiber 44 has been accelerated through the slot 32 and onto the primary barrel 24. Because of the acceleration to the fiber 44 imparted by the slot 32, which functions essentially as a cam, the fiber 44 being wound onto the spool 22 now leads the flying head 46, which has continued to move upward at a constant rate of speed. Because the flying head 46 now lags behind the fiber 44 being wound onto the primary barrel 24, fiber 44 now begins to build up at the slot outlet side of the outboard flange 26.

As shown in Fig. 3E, the buildup of fiber 44 continues until the flying head 46 "catches up" with the fiber 44. At this point, a normal wrap process commences, in which the flying head 46 moves back and forth between the outboard flange 26 and inboard flange 27. Because of the angle and geometry of the slot 32, optical fiber 44 cannot be drawn back into the slot 32 once the normal wrap has begun.

Fig. 4 shows a close up view of the slot 32 at the transition point, i.e., the point at which the fiber 44 has been accelerated by the slot 32 through the outboard flange 26.

It will be appreciated that the functioning of the slot 32 is essentially the same when the fiber source is stationary and the rotating spool 22 is moved up and down along its longitudinal axis.

In summary, once the optical fiber 44 has been attached to the lead meter barrel 28, the lead meter segment of the fiber 44 is wound onto the lead meter barrel 28 automatically until the optical fiber 44 comes into contact with the outboard flange 26, at which point the fiber 44 is accelerated through the slot 32 and then onto the primary barrel 24 of the spool 22. Thus, the need to manually wrap twenty turns of fiber onto the lead meter barrel, as typically required in the prior art, is completely eliminated, thereby significantly increasing the efficiency of the manufacturing process. In addition, the present system has a number of other advantages, discussed further below.

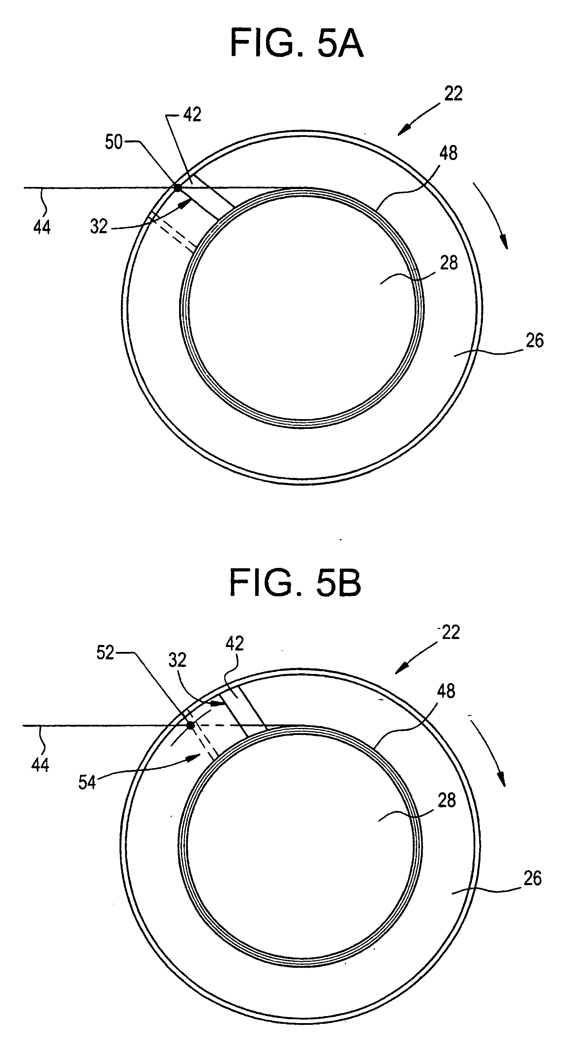

The present shipping spool 22 has a number of operational parameters, which are illustrated in Figs. 5A-E. Fig. 5A shows a bottom view of a shipping spool 22 according to the present invention, with the lead meter flange removed for the purpose of illustration. The lead meter barrel 28 is preferably covered with a layer of elastomeric foam, or other resiliently cushioning material 48 to prevent damage to the fiber 44. In Fig. 5A, the fiber 44 has just been drawn to the "slot entry point" 50 by the immediately adjacent tapered lead-in portion 42. As its name implies, the slot entry point 50 is the point at which the fiber 44 actually enters the slot and begins its acceleration. As shown in Fig. 5A, the slot entry point 50 is proximate to, but not abutting, the circumference of the outboard flange 26.

In Fig. 5B, the rotation of the spool 22 has continued, and the optical fiber 44 has now been accelerated through the slot to a "slot exit point" 52, i.e., the point at which the fiber 44 exits the slot 32. The region of the outboard flange 26 immediately abutting the slot exit point 52 comprises a "slot lead-out area" 54. As shown in Fig. 5B, the slot exit point 52 is located at a point deeper within the circumference of the outboard flange 26 than the slot entry point 50. Once the fiber 44 has exited the slot 32 and the slot exit point 52, it is then wound onto the primary barrel of the spool.

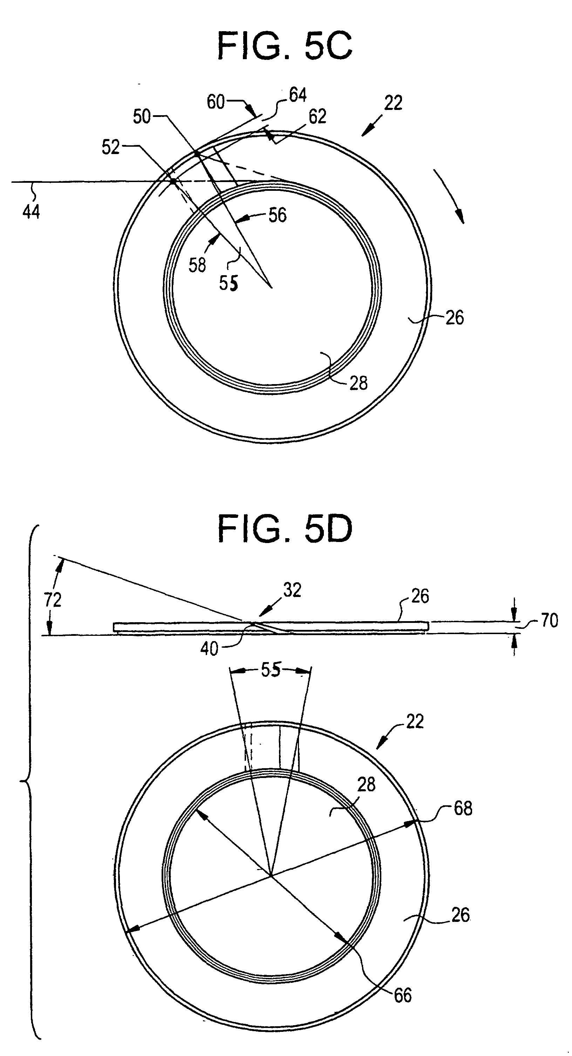

Fig. 5C shows the relationship between the slot entry point and the slot exit point. As shown in Fig. 5C, an acute angle 55 is formed by a first radius 56 including the slot entry point 50 and a second radius 58 including the slot exit point 52. This angle 55 is known as the "slot included angle." Further, the measured difference between the depth 60,62 of the slot entry point 50 and the slot exit point 52 is known as the "depth of acceleration area" 64

Fig. 5D is a composite side and bottom view showing the relationship between the slot 32 and the slot included angle 55. In addition, Fig. 5D illustrates three additional parameters, the lead meter barrel diameter 66, the outboard flange diameter 68, and the outboard flange thickness 70. Also illustrated is the "slot pressure angle" 72 (θ₂), which is the angle formed by the slot's working surface and the outboard flange. As shown in Fig. 5D, the slot pressure angle is less than 45 degrees.

One important operational parameter is the fiber line speed, which, in turn, dictates spool rotational speed. Another operational parameter is the flying head traverse velocity, which is a function of the fiber wrap pitch. For the flange, operational parameters include the slot's included angle, discussed below, and the flange thickness.

Rotational speed, slot included angle and flange thickness determine the traverse event timing and all kinematic and dynamic fiber responses, such as traverse time, velocity, acceleration, and changes in fiber tension. Flying head velocity at flange traverse and flange thickness dictate the probability of a fiber strike to the slot inlet edge, and also control the number of fiber turns that build up while the flying head is passing a beam of the flange and lagging behind fiber deposition occurring at the inside of the flange.

The slot 32 is engineered to be unidirectional for fiber 44 traversing the outboard flange 26. If, during normal wrapping, the fiber 44 makes contact with the outlet side 36 of the slot 32, fiber damage will not occur, nor will the fiber 44 be drawn into the slot 32.

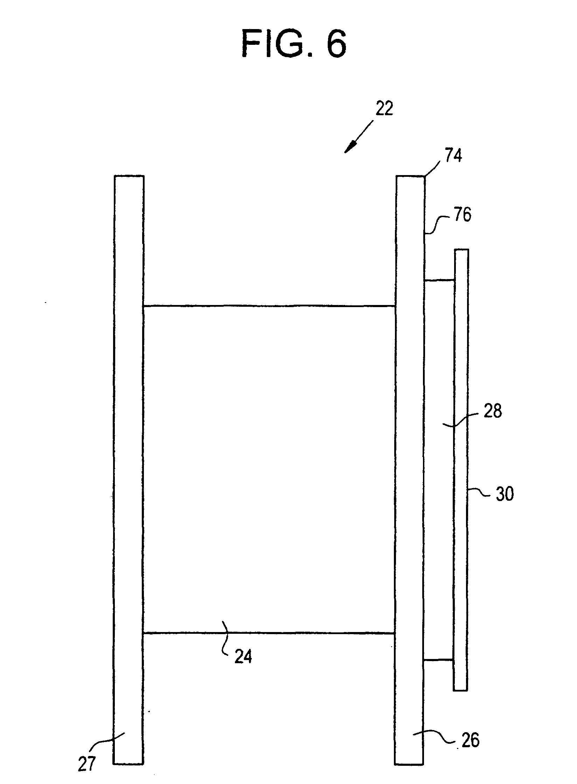

Several alternative embodiments have been developed for the slot 32 and the outboard flange 26. Two basic slot configurations have been developed for use with a flat, i.e., non-tapered, outboard flange, such as that shown in Fig. 6. As shown in Fig. 6, the outboard flange 26 has a square comer 74, and its outside face 76 is flat.

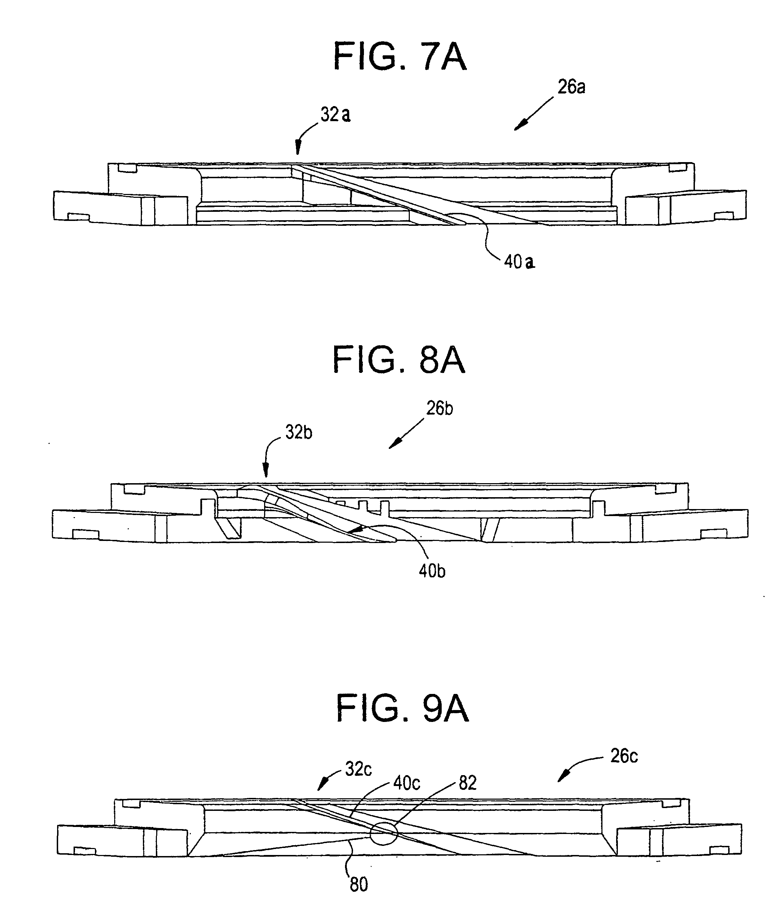

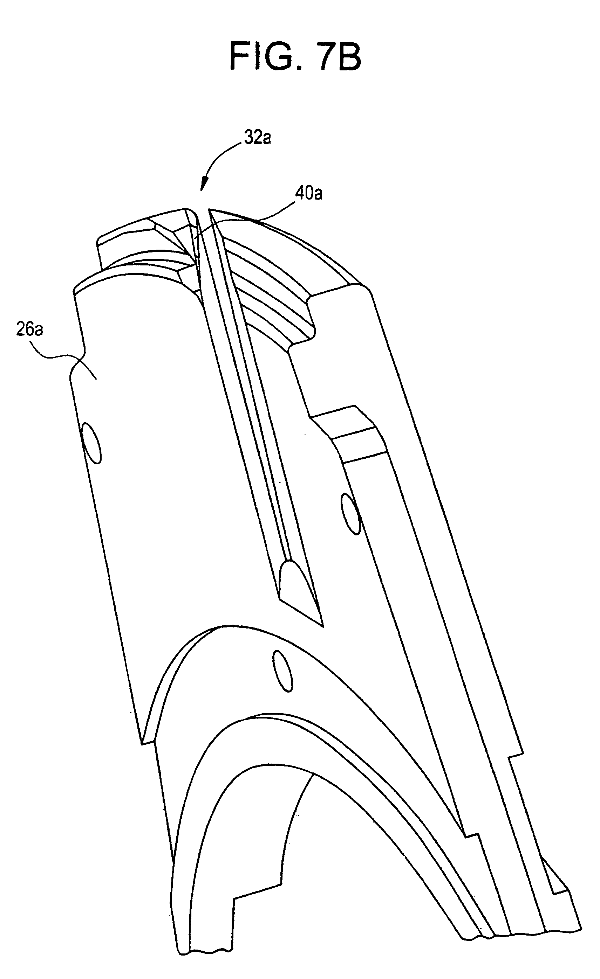

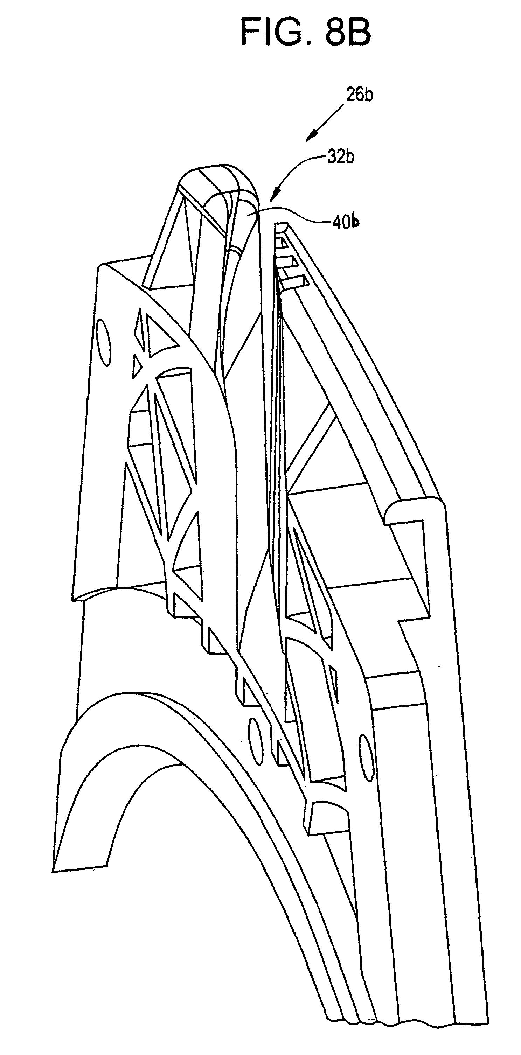

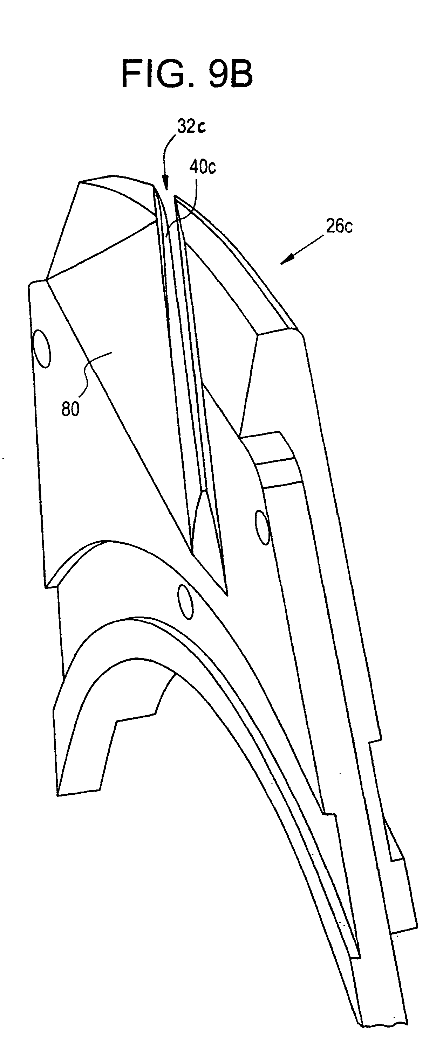

The first embodiment is a so-called "constant velocity" slot, which is the slot in its simplest form. This slot is illustrated in Figs. 7A and 7B, which show; respectively, a side view and a partial perspective view of multi-piece spool design including an outboard flange 26a incorporating a constant velocity slot 32a. The multi-piece design was utilized to test various slot configurations. Thus, although shown as a segment of the flange, in practical implementation, the slot would preferably be formed in an integral circular-shaped flange component similar to that shown in Fig. 2A. The working surface 40a of this slot 32a is simply a planar surface that cuts through the outboard flange 26a of the spool. Radii at the edges of the cut act as surfaces that guide the fiber through the slot. Once the fiber engages in the slot 32a, the fiber is quickly accelerated to its maximum velocity and then travels at this velocity until the fiber completes its traverse through the outboard flange 26a. In this slot configuration, the fiber may experience high accelerations as it enters the slot area. These high accelerations may create tension spikes in the fiber that can significantly impair tension control in the fiber as it is wound. However, it has been determined through experimentation that the tension spikes and loss of tension control with this embodiment are acceptable, and therefore this configuration is a viable means for creating lead meter access.

Figs. 8A and 8B show, respectively, a side view and a partial bottom perspective view of a multi-piece spool design including an outboard flange 26b incorporating a "controlled acceleration" slot 32b, in which the working surface 40b comprises two parabolic curves arranged in an "S" configuration. The first curve initially presents a more gradual angle to the fiber than does the constant velocity slot shown in Figs. 7A and 7B, thereby reducing the acceleration of the fiber at the slot entry point. The parabolic curves in the working surface 40b operate to increase the duration of the fiber acceleration compared with that of the constant velocity slot. However, although its duration is greater, the magnitude of the acceleration is lower. The second parabolic curve, which is curved in a direction opposite to that of the first curve, decelerates the fiber before it exits the slot 32b. Minimizing the exit velocity aids in maintaining tension control of the fiber.

As described above in connection with Figs. 3D and 3E, a system incorporating the present invention can lead to a buildup of fiber 44 on the primary barrel side 24 of the outboard flange 26. The buildup is caused by the action of the slot 32, which accelerates the fiber 44 through the flange 26 at a rate of speed that is greater than the upward movement of the flying head 46. Because the optical fiber 44 being wound onto the spool 22 reaches the primary barrel side 24 of the outboard flange 26 before the flying head 46 "catches up," several turns of fiber 44 are wound onto the primary barrel 24 at the outboard flange 26 before a normal wrap can resume.

The buildup of fiber on the primary barrel 24 at the outboard flange 26 can result in microbending of the fiber 44, as additional layers of fiber 44 are wound onto the primary barrel 24 on top of the buildup. This can cause loops to form as the fiber piles up. Micro-bending of the fiber can cause attenuation losses, which are detected by OTDR testing. Subsequent layers of fiber which are then wound on top of these first wraps tend to exacerbate the problem due to the increased pressure on the fiber that are piled up. The presence of such-losses exceeding a predetermined level will require that the fiber be rewound before it can be shipped to the customer. An additional problem - with this buildup is that the pile of fiber can further influence the wrap quality of remaining passes of fiber. The buildup can be amplified as subsequent layers of fiber are deposited.

One approach to solve this problem is to wind the fiber at a pitch that approaches the flange thickness, which is typically 0.95 cm (3/8"). However, the ability to wind at the necessary pitch becomes increasingly difficult as the machine increases the winding speed. Thus, alternative geometries have been developed for the outboard flange 26 and the slot 32 to address the buildup issue.

One embodiment of the spool 22 to address the buildup issue includes a taper on the outboard flange 26. This taper 78 is illustrated in Fig. 2B, discussed above. The use of an outboard flange 26 with a tapered outside face reduces this buildup problem. This taper 78 functions to delay fiber entry into the slot 32. The fiber buildup is then biased to the lead meter side 28 of the spool flange 26. With the buildup occurring on the outside of the spool, i.e., on the lead meter barrel 28, attenuation issues can be reduced since the fiber is not subjected to the pressure of a pack being wound on top of it. Thus, the use of a tapered flange is preferred to a flat, non-tapered flange, for creating the lead meter with minimal losses and simplicity of equipment design.

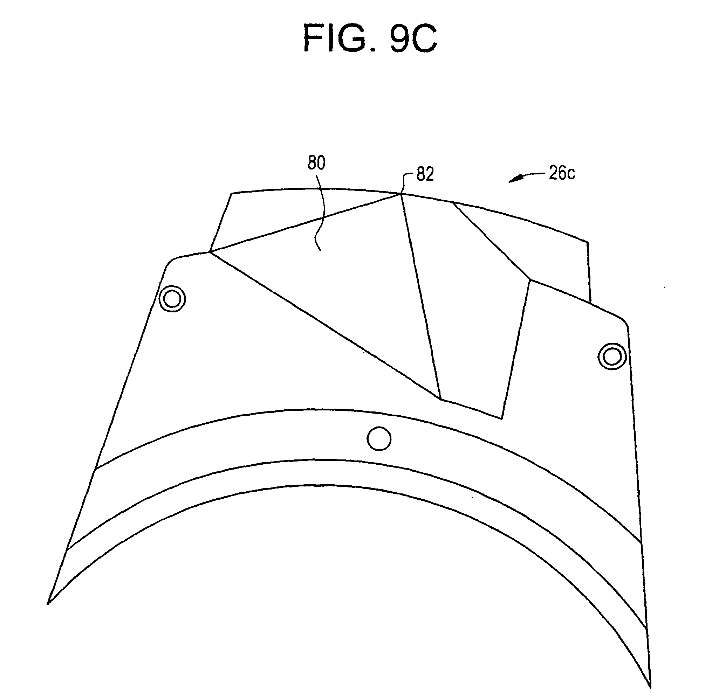

In addition to using a tapered flange design, it is also possible to bias the buildup towards the lead meter barrel by using a modified slot design. Figs. 9A-C show, respectively, side, bottom perspective, and bottom views of an outboard flange 26c incorporating such a design. As shown in Figs. 9A-C, a section of the slot's working surface 40c has been cut away to form a deflecting surface 80. This cutaway portion serves to move the slot engagement point 82 closer to the primary barrel, thereby allowing the flying head 46 to advance for several turns beyond the point at which the optical fiber 44 would normally enter the slot 32c. Further, the deflecting surface 80 created by the cutaway portion serves to deflect optical fiber 44 approaching the working surface until the engagement point 82 has been reached. If desired, the delayed entry slot can be combined with a tapered flange design.

Other arrangements may be used to address fiber buildup at the primary barrel side of the outboard flange. For example, it is possible to use machine controls to allow flying head accelerations and velocities at the outboard traverse point sufficient to create a maximum buildup of less than two fibers at speeds of greater than 25 m/s. Mechanisms for reducing this buildup further are possible through additional enhancements to the machine controls. In addition, an "assist" device, with a low mass and high acceleration, can be used in conjunction with the traverse to momentarily accelerate the final pulley, and fiber, over the width of the flange. Alternatively, the fiber could be retained momentarily by a solenoid-driven actuator until the final pulley is beyond the flange, then released.

In a more complex system, lateral motion of the fiber can be timed according to the radial position of the rotating spool, such that the fiber enters the slot without contacting the flange or the slot surfaces. This technique, while readily practicable at slower speeds, becomes increasingly difficult at higher speeds. The requirements of the system are dictated by the size (i.e., width and angle) of the slot, and the line speed of the equipment.

EP-A-0 873 962 assigned to the assignee of the present application, describes an automated draw winder that can advantageously be combined with the present invention. The described automated draw winder includes a drawing machine in which, after a break in the optical fiber has occurred, the fiber continues to be drawn by a tractor, and is collected using an aspirator. After a series of motion control sequences, the aspirator, which maintains tension on the fiber, introduces the fiber to a snagger tooth, proximate to the spool flange.

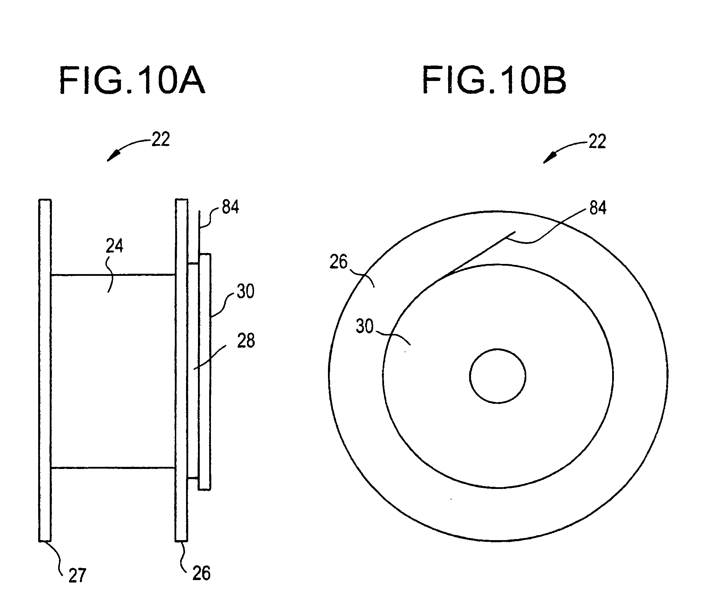

It is possible to use a spool according to the present invention in conjunction with the automated draw winder to create an automated system. After each shipping spool has been wound, the machine can automatically break the fiber, capture the fiber end as described above, and affix it to the snagger tooth again. Figs. 10A-B show, respectively, side and bottom views of a shipping spool having a protruding fiber end 84 that has been trapped by a snagger tooth.

Once the fiber end 84 has been snagged, the optical fiber is wound onto the lead meter barrel 28, accelerated through the slot, and then wound onto the primary barrel 24, as described above. After the shipping spool has been completely wound, the fiber is then cut. The loose end is then collected using the aspirator as a new spool is moved into position for winding.

The present system provides a number of advantages in addition to those described above. The geometry of fiber entry onto the primary barrel from the lead meter barrel reduces losses associated with microbending effects inherent to typical prior art spool and winding processes. In a typical prior art system, the small lead meter hole and lack of tension control when manually winding the lead meter often results in excessive microbending. This microbending, in turn, primarily causes coupling losses, a type of attenuation loss, to be detected by OTDR testing. Currently, the remedy for this inability to "peak" the OTDR due to microbending is to unwind the entire lead meter and relieve the bending stresses. The slotted spool, according to the present invention mitigates this problem by utilizing a gradual transition of the fiber from one side of the outboard flange to the other, with a substantially reduced risk of microbending, and by application of a controlled tension on the fiber when the lead meter is wound.

Further, the present invention facilitates the automation of lead meter removal. Through programming of the winding machine controls, several layers of fiber can be deposited onto the lead meter barrel before the fiber passes through the slot in the spool outboard flange. The net effect is that the first layer is over-wrapped and retained. This winding pattern can be advantageously combined with a snagger tooth arrangement, in which an end of the optical fiber 84 extends from the barrel of the lead meter area to a snagger tooth. This combination facilitates the automation of lead meter removal in two ways. First, the lead meter end of the fiber protrudes from the barrel for easy location using automated equipment. Second, the over-wraps on the lead meter barrel retain the fiber and allow simple removal of the fiber by pulling on the free end to release the fiber from the snagger tooth. The over-wraps prevent the fiber from unraveling as the end is pulled.

Another advantage of the present system arises during the on-site installation of the fiber. It is normally standard procedure for fiber cablers to cut the fiber at the point that it exits the lead meter hole. This is to prevent high-tension breaks, i.e., where the fiber passes through the lead meter hole, at the completion of the processing of the fiber. Many cabling lines are not automatically stopped before the spool is exhausted. The slotted flange spool, with its external, integrally formed lead meter barrel, eliminates the need to cut the fiber, as the fiber can be unwound out of the slot and off of the lead meter barrel. This technique has two benefits. First, it takes less time to prepare a spool for processing. Second, there is less damage to the spool due to cuts.

A further advantageous feature of the presently disclosed slot is that, unlike other prior art slots, such as that described in United States Patent No. 4,696,438, it minimizes exposure of the side of the wound fiber pack to the elements. The angular penetration of the slot into the spool flange helps protect the fiber pack.

Further, the present slot technique can also be used in a more conventional "bulk-spool" mode as well. For example, EP-A-0 873 962, discussed above, discloses an automated draw winder, in which a snagging technique is used to snag an end of optical fiber for winding onto a bulk spool. As disclosed therein, the snagging technique results in a "snag end" residing on the inside face of the spool flange. For various reasons, it may be advantageous for the snag end to reside on the outside face of the spool flange. The presently disclosed spool and winding system may be used to accomplish this by capturing the snag end on the outside face of the spool flange and using a slot in the flange as described above to move the fiber from the outside of the flange to the inside of the flange for winding.

Fig. 11 shows a bottom view of an outboard flange 26d incorporating a rib pattern that may be advantageously used in practicing the present invention. A slot 32 identical to that shown in Fig. 8b may be included to allow the optical fiber to easily pass from the lead meter portion to the primary portion during winding. As shown in Fig. 11, outboard flange 26d preferably combines three types of ribs: radial ribs 86, a circumferential rib 88, and curved ribs 90a, 90b, although each may be utilized individually. The radial ribs 86 are preferably equally-spaced straight ribs that extend in a radial direction from the circumferential rib 88 to the periphery of the flange 26d and which include a taper as they progress towards the periphery. The circumferential rib 88 is a circular rib that provides both a functional surface for the above-described lead meter creation process as well as a structural tie between the radial ribs 86 and the curved ribs 90a, 90b. It should be understood that the circumferential rib 88 extends slightly above the curved ribs 90a, 90b and the radial ribs 86 to provide a functional surface. In particular, the radial ribs 86 terminate at a point adjacent to the circumferential ribs 88.

The curved ribs 90a, 90b shown in Fig. 11 combine flange stiffness with a high strength-to-weight ratio and also facilitate manufacture using an injection molding process. A plurality of clockwise curved ribs 90a intersect a plurality of counterclockwise curved ribs 90b to form an intertwined strengthening structure. Preferably, the curved ribs 90a, 90b intersect at multiple points. Most preferably, the curved ribs 90a, 90b intersect at the lead meter barrel 28 and also at the circumferential rib 88. The radially extending ribs 86 preferably extend outward from the intersection points 89.

The increased strength is a result of the manner in which the curved ribs 90a, 90b cooperate and intersect to form at least a first and preferably, as illustrated in Fig. 11, a second row of diamond-shaped support members which extend around the circumference of the flange. The curved shape of the ribs 90a, 90b, together with the angled intersections formed to make the diamond support structure, facilitate molding via an injection molding process. Of course, it is preferable that similar or identical strengthening structures, such as curved intersecting ribs, circumferential ribs, and/or radial ribs are included on the inboard flange, as well. Moreover, although one style of intersecting curved ribs is illustrated in Fig. 11, various other shapes of curvatures may be implemented as well.

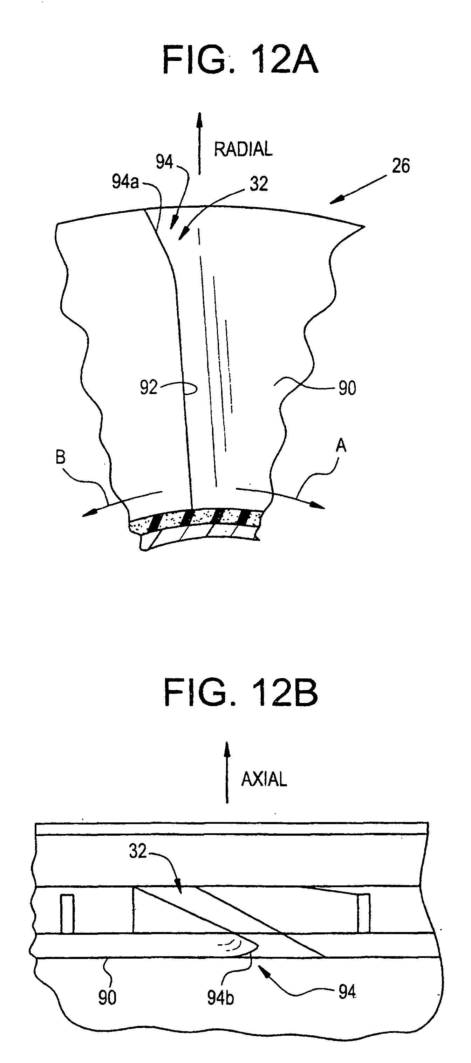

Fig. 12A and 12B illustrate another important feature of the slot 32. This feature is important when, for whatever reason, the fiber is rewound onto the spool in a direction opposite (designated by arrow B) to the original wind direction (designated by arrow A). For example, some end users may wish to place further treatments or coatings on the fiber and then rewind it onto a spool. As shown in Fig. 12A, which is a view looking from the center of the spool towards the inboard surface 90 (Fig. 2C) of the outboard flange 26, the trailing edge 92 of the slot 32 includes at its outermost radial extent, an anti-traverse profile 94. The profile 94 preferably includes a compound radiused surface, i.e., a radius along two orthogonal directions. However a radius, taper, combinations thereof or other non-straight profiles may provide similar results. This profile 94 prevents the fiber, as it as being wound in reverse, from inadvertently traversing back through the slot 32.

The profile 94 may include, for example, a radial component 94a, as is shown in Fig. 12A, wherein the trailing edge 92 departs from a straight line path along the radial direction near the radial terminal portion of the outboard flange 26. Moreover, as best shown in Fig. 12B, the profile 94 on the trailing edge 92 may also include an axial, non-straight component 94b along its length, i.e., the profile extends from the inboard surface 90 into the outboard flange 26 in an axial direction. This component 94b may also include a compound radius, full radius, taper, combinations thereof, or other like shapes which further minimizes the possibility of the fiber traversing back through the slot 32 on a reverse wind.

A suitable amount or extent of radius, taper or other profile will be determined in accordance with the winding speed and conditions. Because of the wind angle, a suitable profile 94 virtually eliminates the chance of re-traversing through the slot 32. By way of example, and not to be considered limiting, in a spool with 12 cm radius flange and 7.5 cm radius spool, it has been determined that a radius of between about 1.0 mm and 5.0 mm on the axial component 94b and a radius of about 3.5 mm on the radial component 94a blending into a 3.0 mm straight section near the periphery provides conditions that desirably allow for over-travel of the winding spool head of about 3 mm beyond the outboard flange 26 without any anti-traverse through the slot 32 occurring.

While the foregoing description includes details which will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto.

## Claims

1. An injection-molded plastic spool (22) for high-speed winding thereon an optical fiber (44) with an easy access to the inner end of the wound fiber, comprising:
a primary barrel (24) and a lead meter barrel (28) separated from each other by an outboard flange (26),
the outboard flange (26) having a molded slot (32) extending to its periphery,
the slot (32) providing a path for the optical fiber (44) between the lead meter barrel and primary barrel (28, 24), and having a slot inlet (34) facing the lead meter barrel (28) and a slot outlet (36) facing the primary barrel (24),
the slot (32) further including a working surface (40) and a lead-in surface (38) opposite the working surface (40), the working surface (40) being angled (θ₂) at less than 90 degrees with respect to the inboard surface (90) of the outboard flange (26), wherein the inboard surface (90) is located on the side of the outboard flange (26) adjacent to the primary barrel (24).

2. The spool according to claim 1, wherein the slot (32) is angled to form a path for a fiber (44) between the lead meter barrel (28) and primary barrel (24) wherein fiber (44) being wound onto the lead meter barrel (28) comes into contact with the slot inlet (34), the fiber (44) is drawn into the slot (32) and then guided by the slot (32) onto the primary barrel (24).

3. The spool according to claim 1, wherein the lead-in surface (38) of the slot (32) includes a tapered portion (42), such that the fiber (44) does not skip over the slot (32) as the fiber (44) is wound onto the spool (22) at process line speed.

4. The spool according to claim 1, wherein the slot outlet (36) is narrower than the slot inlet (34).

5. The spool according to claim 1, wherein the working surface (40) is angled (θ₂) at less than about 45° with respect to the inboard surface (90) of the outboard flange (26).

6. The spool according to claim 1, wherein the working surface (40) is angled (θ₂) at less than about 20° with respect to the inboard surface (90) of the outboard flange (26).

7. The spool of claim 1, wherein the slot (32) extends radially inward from the periphery of the outboard flange (26).

8. The spool according to claim 1, wherein the working surface (40a, 40b, 40c) comprises a planar or a curved surface.

9. The spool according to claim 1, wherein at least one of the outboard flange (26) and an inboard flange (27) opposed to the outboard flange (26) comprises a plurality of curved, intersecting ribs (90a, 90b).

10. The spool according to claim 9 wherein the plurality of curved, intersecting ribs (90a, 90b) form at least one circumferential row of diamond-shaped strengthening members.

11. The spool according to claim 9 wherein the plurality of curved, intersecting ribs (90a, 90b) form a plurality of radially-spaced circumferential rows of diamond-shaped strengthening members.

12. The spool according to claim 9 further comprising a circumferential rib (88).

13. The spool according to claim 9 further comprising a plurality of radially extending ribs (86).

14. The spool according to claim 9 wherein the plurality of curved, intersecting ribs (90a, 90b) extend from a point adjacent to the lead meter barrel (28) to a circumferential rib (88).

15. The spool according to claim 1 further comprising a plurality of curved, intersecting ribs (90a, 90b) that extend from a point adjacent to the lead meter barrel (28) to a circumferential rib (88) and a plurality of radially directed ribs (86) extending from the circumferential rib (88) towards an outermost periphery of the outboard flange (26) of the spool (22).

16. The spool according to claim 1 further comprising an anti-traverse profile (94) formed on a trailing edge (92) of the slot (32).

17. The spool according to claim 16, wherein the anti-traverse profile (94) includes an axial component (94b).

18. The spool according to claim 16, wherein the anti-traverse profile (94) includes a radial component (94a).

19. A method for high-speed winding an optical fiber (44) onto a spool (22) with an easy access to the inner end of the wound fiber, comprising the following steps:
(a) providing a spool (22) having a primary and lead meter barrel (24,28) separated from each other by an outboard flange (26), the outboard flange (26) having a slot (32) extending to its periphery providing a path for the optical fiber (44) between the lead meter barrel and primary barrel (28,29), the slot (32) having an inlet (34) facing the lead meter barrel (28) and an outlet (36) facing the primary barrel (24), the slot (32) further including a working surface (40) and a lead-in surface (38) opposite the working surface (40), the working surface (40) being angled (θ₂) at less than 90 degrees with respect to the side of the outboard flange (26) adjacent to the primary barrel (24);
(b) winding the fiber (44) onto the lead meter barrel (28);
(c) traversing the fiber (44) through the slot (32); and
(d) winding the fiber (44) onto the primary barrel (24).

20. The method according to claim 19, wherein step (a) includes:
providing an outboard flange (26) having a slot (32) angled such that when the optical fiber (44) being wound onto the lead meter barrel (28) comes into contact with the slot inlet (34), the fiber (44) is drawn into the slot (32) and then guided by the slot (32) onto the primary barrel (24).

21. The method according to claim 19, wherein step (b) includes:
rotatably mounting the spool (22) on a longitudinal axis relative to a fiber source such that when the spool (22) is rotated and the optical fiber (44) from the fiber source is wound onto the lead meter barrel (28), the fiber (44) contacts the slot inlet (34) after a lead meter portion of the fiber is wound onto the lead meter barrel (28).

22. The method according to claim 19, wherein
step (b) includes guiding the fiber through a flying head assembly (46) for winding it onto the lead meter barrel (28);
step (c) includes accelerating the fiber by the slot geometry onto the primary barrel (24) without interrupting the winding process;
step (d) includes building up the fiber onto the primary barrel (24) until the flying head (46) catches up with the fiber to provide easy access to the under-wrap and further winding the fiber in a normal wrap process.

## Patentansprüche

1. Durch Einspritzgießen hergestellte Kunststoffspule (22) zur Hochgeschwindigkeitswicklung eines Lichtwellenleiters (44) auf dieselbe mit einem leichten Zugang zum inneren Ende der aufgewickelten Faser mit:
einer Primärtrommel (24) und einer Leitungsmesseinrichtungstrommel (28), welche durch einen Außenflansch (26) voneinander beabstandet sind,
wobei der Außenflansch (26) einen gebildeten Schlitz (32) aufweist, welcher zu dem Umfang desselben verläuft,
wobei der Schlitz (32) einen Weg für den Lichtwellenleiter (44) zwischen der Leitungsmesseinrichtungstrommel (28) und der Primärtrommel (24) schafft und eine Schlitzeinlassöffnung (34), welche zur Leitungsmesseinrichtungstrommel (28) weist, und eine Schlitzauslassöffnung (36) aufweist, welche zur Primärtrommel (24) weist, und
wobei der Schlitz (32) weiter eine wirksame Oberfläche (40) und eine der wirksamen Oberfläche (40) gegenüberliegende Einführungsfläche (38) enthält, wobei die wirksame Oberfläche (40) mit einem Winkel (θ₂) von mindestens 90 Grad in Bezug auf die Innenfläche (90) des Außenflansches (26) versehen ist, wobei sich die Innenfläche (90) auf der Seite des Außenflansches (26) befindet, welcher an die Primärtrommel (24) angrenzt.

2. Spule nach Anspruch 1, wobei der Schlitz (32) mit einem Winkel versehen ist, um einen Weg für eine Faser (44) zwischen der Leitungsmesseinrichtungstrommel (28) und der Primärtrommel (24) zu bilden, wobei die auf die Leitungsmesseinrichtungstrommel (28) gewickelte Faser (44) die Schlitzeinlassöffnung (34) berührt, wobei die Faser (44) in den Schlitz (32) gezogen und dann durch den Schlitz (32) auf die Primärtrommel (24) geführt wird.

3. Spule nach Anspruch 1, wobei die Einführungsfläche (38) des Schlitzes (32) einen verjüngten Abschnitt (42) enthält, damit die Faser (44) nicht über den Schlitz (32) springt, während sie mit einer Fertigungsmaschinengeschwindigkeit auf die Spule (32) gewickelt wird.

4. Spule nach Anspruch 1, wobei die Schlitzauslassöffnung (36) schmaler als die Schlitzeinlassöffnung (34) ist.

5. Spule nach Anspruch 1, wobei die wirksame Oberfläche (40) mit einem Winkel (θ₂) von mindestens 45° in Bezug auf die Innenfläche (90) des Außenflansches (26) versehen ist.

6. Spule nach Anspruch 1, wobei die wirksame Oberfläche (40) mit einem Winkel (θ₂) von mindestens 20° in Bezug auf die Innenfläche (90) des Außenflansches (26) versehen ist.

7. Spule nach Anspruch 1, wobei der Schlitz (32) vom Umfang des Außenflansches (26) radial nach innen verläuft.

8. Spule nach Anspruch 1, wobei die wirksame Oberfläche (40a, 40b, 40c) eine ebene oder bogenförmige Oberfläche enthält.

9. Spule nach Anspruch 1, wobei zumindest der Außenflansch (26) oder der dem Außenflansch (26) gegenüberliegende Innenflansch (27) eine Vielzahl von gebogenen Rippen (90a, 90b) enthält, welche sich kreuzen.

10. Spule nach Anspruch 9, wobei die Vielzahl von gebogenen, sich kreuzenden Rippen (90a, 90b) mindestens eine Umfangsreihe an rautenförmigen, versteifenden Elementen bilden.

11. Spule nach Anspruch 9, wobei die Vielzahl von gebogenen, sich kreuzenden Rippen (90a, 90b) eine Vielzahl von radial beabstandeten Umfangsreihen an rautenförmigen, festigenden Elementen bilden.

12. Spule nach Anspruch 9, welche zudem eine Umfangsrippe (88) enthält.

13. Spule nach Anspruch 9, welche zudem eine Vielzahl von radial verlaufenden Rippen (86) enthält.

14. Spule nach Anspruch 9, wobei die Vielzahl von gebogenen, sich kreuzenden Rippen (90a, 90b) von einer an die Leitungsmesseinrichtungstrommel (28) angrenzenden Stelle zu einer Umfangsrippe (88) verlaufen.

15. Spule nach Anspruch 1, welche zudem eine Vielzahl von gebogenen, sich kreuzenden Rippen (90a, 90b), welche von einer an die Leitungsmesseinrichtungstrommel (28) angrenzenden Stelle zu einer Umfangsrippe (88) verlaufen, und eine Vielzahl von radial ausgerichteten Rippen (86) enthält, welche von der Umfangsrippe (88) zu einem äußersten Umfang des Außenflansches (26) der Spule (22) verlaufen.

16. Spule nach Anspruch 1, welche zudem ein antitraversierendes Profil (94) enthält, welches auf einer hinteren Kante (92) des Schlitzes (32) gebildet ist.

17. Spule nach Anspruch 16, wobei das anti-traversierende Profil (94) ein axiales Element (94b) enthält.

18. Spule nach Anspruch 16, wobei das anti-traversierende Profil (94) ein radiales Element (94b) enthält.

19. Verfahren zur Hochgeschwindigkeitswicklung eines Lichtwellenleiters (44) auf eine Spule (22) mit einem leichten Zugang zum inneren Ende der aufgewickelten Faser, welches die folgenden Schritte enthält:
(a) Schaffen einer Spule (22) mit einer Primär- und Leitungsmesseinrichtungstrommel (24, 28), welche durch einen Außenflansch (26) voneinander getrennt sind, wobei der Außenflansch (26) einen Schlitz (32) aufweist, welcher zu seinem Umfang verläuft und einen Weg für den Lichtwellenleiter (44) zwischen der Leitungsmesseinrichtungstrommel und der Primärtrommel (28, 24) schafft, wobei der Schlitz (32) eine Einlassöffnung (34), welche zur Leitungsmesseinrichtungstrommel (28) weist, und eine Auslassöffnung (36) aufweist, welche zur Primärtrommel (24) weist, wobei der Schlitz (32) zudem eine wirksame Oberfläche (40) und eine gegenüber der wirksamen Oberfläche (40) liegende Einführungsfläche (38) enthält, wobei die wirksame Oberfläche (40) mit einem Winkel (θ₂) von mindestens 90 Grad in Bezug auf die Seite des an die Primärtrommel (24) angrenzenden Außenflansches (26) abgewinkelt ist;
(b) Wickeln der Faser (44) auf die Leitungsmesseinrichtungstrommel (28);
(c) Queren der Faser (44) durch den Schlitz (32); und
(d) Wickeln der Faser (44) auf die Primärtrommel (24).

20. Verfahren nach Anspruch 19, wobei der Schritt (a) Folgendes enthält: Schaffen eines Außenflansches (26) mit einem Schlitz (32), welcher so mit einem Winkel versehen ist, dass beim Wickeln des Lichtwellenleiters (44) auf die Leitungsmesseinrichtungstrommel (28) die Faser (44) die Schlitzeinlassöffnung (34) berührt, in den Schlitz (32) gezogen und dann durch den Schlitz (32) auf die Primärtrommel (24) geführt wird.

21. Verfahren nach Anspruch 19, wobei der Schritt (b) Folgendes enthält: drehbares Befestigen der Spule (22) auf einer Längsachse relativ zu einer Faserquelle, so dass beim Drehen der Spule (22) und beim Wickeln des Lichtwellenleiters (44) von der Faserquelle auf die Leitungsmesseinrichtungstrommel (28) die Faser (44) die Schlitzeinlassöffnung (34) berührt, nachdem ein Abschnitt der Leitungsmesseinrichtung der Faser auf die Leitungsmesseinrichtungstrommel (28) gewickelt wurde.

22. Verfahren nach Anspruch 19, wobei
Schritt (b) das Leiten der Faser durch eine Einrichtung (46) eines schwimmenden Magnetkopfes zum Wickeln derselben auf die Leitungsmesseinrichtungstrommel (28) enthält;
Schritt (c) das Beschleunigen der Faser durch die Gestaltung des Schlitzes auf der Primärtrommel (24) ohne das Unterbrechen des Wicklungsverfahrens enthält; und
Schritt (d) das Aufbauen der Faser auf der Primärtrommel (24) enthält, bis der schwimmende Magnetkopf (46) die Faser einholt, um einen leichten Zugang zur untenliegenden Wicklung zu schaffen und zudem die Faser in einem normalen Wicklungsverfahren aufzuwickeln.

## Revendications

1. Bobine (22) en matière plastique moulée par injection pour y enrouler à grande vitesse une fibre (44) optique en ménageant un accès aisé à l'extrémité interne de la fibre enroulée, comprenant :
un tambour (24) primaire et un tambour (28) de mesure de fil séparés l'un de l'autre par un rebord (26) sortant ;
le rebord (26) sortant ayant une fente (32) venue de moulage s'étendant à sa périphérie,
la fente (32) ménageant un chemin pour la fibre (44) optique entre le tambour (28) de mesure de fil et le tambour (28, 24) primaire et ayant une entrée (34) de fente faisant face au tambour (28) de mesure de fil et une sortie (36) de fente faisant face au tambour (24) primaire ;
la fente (32) comprenant, en outre, une surface (40) de travail et une surface (38) d'entrée opposée à la surface (40) de travail, la surface (40) de travail faisant un angle (θ₂) d'au moins 90 degrés avec la surface (90) rentrante du rebord (26) sortant, la surface (90) rentrante étant placée du côté du rebord (26) sortant voisin du tambour (24) primaire.

2. Bobine suivant la revendication 1, dans laquelle la fente (32) fait un angle pour former un chemin pour une fibre (44) entre le tambour (28) de mesure de fil et le tambour (24) primaire, la fibre (44) enroulée sur le tambour (28) de mesure de fil venant en contact avec l'entrée (34) de la fente, la fibre (44) étant tirée dans la fente (32), puis guidée par la fente (32) sur le tambour (24) primaire.

3. Bobine suivant la revendication 1, dans laquelle la surface (38) d'entrée de la fente (32) comprend une partie (42) conique de façon à ce que la fibre (44) ne manque pas la fente (32) lorsque la fibre (44) est enroulée sur la bobine (22) à la vitesse en ligne du procédé.

4. Bobine suivant la revendication 1, dans laquelle la sortie (36) de la fente est plus étroite que l'entrée (34) de la fente.

5. Bobine suivant la revendication 1, dans laquelle la surface (40) de travail fait un angle (θ₂) de moins d'environ 45 degrés avec la surface (90) rentrante du rebord (26) sortant.

6. Bobine suivant la revendication 1, dans laquelle la surface (40) de travail fait un angle (θ₂) de moins d'environ 20 degrés avec la surface (90) rentrante du rebord (26) sortant.

7. Bobine suivant la revendication 1, dans laquelle la fente (32) s'étend radialement vers l'intérieur depuis la périphérie du rebord (26) sortant.

8. Bobine suivant la revendication 1, dans laquelle la surface (40a, 40b, 40c) de travail comprend une surface plane ou une surface courbée.

9. Bobine suivant la revendication 1, dans laquelle au moins l'un du rebord (26) sortant et d'un rebord (27) entrant opposé au rebord (26) sortant comprend une pluralité de nervures (90a, 90b) courbées qui s'entrecroisent.

10. Bobine suivant la revendication 9, dans laquelle la pluralité de nervures (90a, 90b) courbées qui s'entrecroisent forment au moins une rangée circonférentielle d'éléments de renfort en forme de losange.

11. Bobine suivant la revendication 9, dans laquelle la pluralité de nervures (90a, 90b) courbées qui s'entrecroisent forment une pluralité de rangées circonférentielles à distance radialement d'éléments de renfort en forme de losange.

12. Bobine suivant la revendication 9 comprenant, en outre, une nervure (88) circonférentielle.

13. Bobine suivant la revendication 9 comprenant, en outre, une pluralité de nervures (86) s'étendant radialement.

14. Bobine suivant la revendication 9, dans laquelle la pluralité de nervures (90a, 90b) courbées qui s'entrecroisent s'étend d'un point voisin du tambour (28) de mesure de fil à une nervure (88) circonférentielle.

15. Bobine suivant la revendication 1 comprenant, en outre, une pluralité de nervures (90a, 90b) courbées qui s'entrecroisent et qui s'étendent d'un point voisin du tambour (28) de mesure de fil à une nervure (88) circonférentielle et une pluralité de nervures (86) dirigées radialement s'étendant de la nervure (88) circonférentielle vers une périphérie la plus à l'extérieur du rebord (26) sortant de la bobine (22).

16. Bobine suivant la revendication 1 comprenant, en outre, un profilé (94) d'antitraversement formé sur un bord (92) de fuite de la fente (32).

17. Bobine suivant la revendication 16, dans laquelle le profil (94) d'antitraversement comprend un élément (94b) axial.

18. Bobine suivant la revendication 16, dans laquelle le profil (94) d'antitraversement comprend un élément (94a) radial.

19. Procédé d'enroulement à grande vitesse d'une fibre (44) optique sur une bobine (22) avec un accès aisé à l'extrémité inférieure de la fibre enroulée, comprenant les stades suivants :
(a) on prévoit une bobine (22) ayant un tambour (24) primaire et un tambour (28) de mesure de fil séparés l'un de l'autre par un rebord (26) sortant, le rebord (26) sortant ayant une fente (32) s'étendant à sa périphérie ménageant un chemin pour la fibre (44) optique entre le tambour (28) de mesure de fil et le tambour (24) primaire, la fente (32) ayant une entrée (34) faisant face au tambour (28) de mesure de fil et une sortie (36) faisant face au tambour (24) primaire, la fente (32) comprenant, en outre, une surface (40) de travail et une surface (38) d'entrée opposée à la surface (40) de travail, la surface (40) de travail faisant un angle (θ₂) d'au moins 90 degrés avec le côté du rebord (26) sortant voisin du tambour (24) primaire ;
(b) on enroule la fibre (44) sur le tambour (28) de mesure de fil ;
(c) on fait passer la fibre (44) dans la fente (32) ;
(d) on enroule la fibre (44) sur le tambour (24) primaire.

20. Procédé suivant la revendication 19, dans lequel le stade (a) consiste :
à prévoir un rebord (26) sortant ayant une fente (32) faisant un angle tel que, lorsque la fibre (44) optique enroulée sur le tambour (28) de mesure de fil vient en contact avec l'entrée (34) de la fente, la fibre (44) est tirée dans la fente (32), puis guidée par la fente (32) sur le tambour (24) primaire.

21. Procédé suivant le revendication 19, dans lequel le stade (b) consiste :
à monter en rotation la bobine (22) sur un axe longitudinal par rapport à une source de fibre de façon à ce que, lorsque la bobine (22) tourne et lorsque la fibre (44) optique en provenance de la source de fibre s'enroule sur le tambour (28) de mesure de fil, la fibre (44) vient en contact avec l'entrée (34) de la fente après qu'une partie de mesure de fil de la fibre a été enroulée sur le tambour (28) de mesure de fil.

22. Procédé suivant la revendication 19, dans lequel
le stade (b) consiste à guider la fibre dans un ensemble (46) à tête volante pour l'enrouler sur le tambour (28) de mesure de fil ;
le stade (c) consiste à accélérer la fibre par la géométrie de la fente sur le tambour (24) primaire sans interrompre l'opération d'enroulement ;
le stade (d) consiste à accumuler la fibre sur le tambour (24) primaire jusqu'à ce que la tête (46) volante se prenne avec la fibre pour ménager un accès aisé à ce qui est enroulé en dessous et à continuer à enrouler la fibre suivant une opération d'enroulement normal.
